(19) Europäisches Patentamt
European Patent Office
Office européen des brevets

(11) EP 2 293 430 A1

(12) **EUROPÄISCHE PATENTANMELDUNG**

(43) Veröffentlichungstag:
**09.03.2011 Patentblatt 2011/10**

(51) Int Cl.:
***H02P 6/18*** *(2006.01)*

(21) Anmeldenummer: **09169607.0**

(22) Anmeldetag: **07.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Technische Universität Darmstadt
64283 Darmstadt (DE)**

(72) Erfinder: **Leidhold, Roberto
64287, Darmstadt (DE)**

(74) Vertreter: **Stumpf, Peter
TransMIT Gesellschaft für Technologietransfer mbH
Kerkrader Straße 3
D-35394 Gießen (DE)**

(54) **Vorrichtung und Verfahren zur Rotorpositionsermittlung bei geringer Drehzahl oder bei Stillstand**

(57) Die Erfindung beschreibt eine Schaltungsanordnung und einen Verfahren zur Ermittlung der Rotorposition bei langsam drehenden Rotoren oder im Stillstand. Es wird hierbei ein hochfrequentes-Signal im Sternpunkt eingespeist (Nullkomponente) und über die Verteilung des hochfrequenten-Signals in den Spulen (Nicht-Nullkomponente) die Rotorlage ermittelt.

**[Anhängende Zeichnungen]**

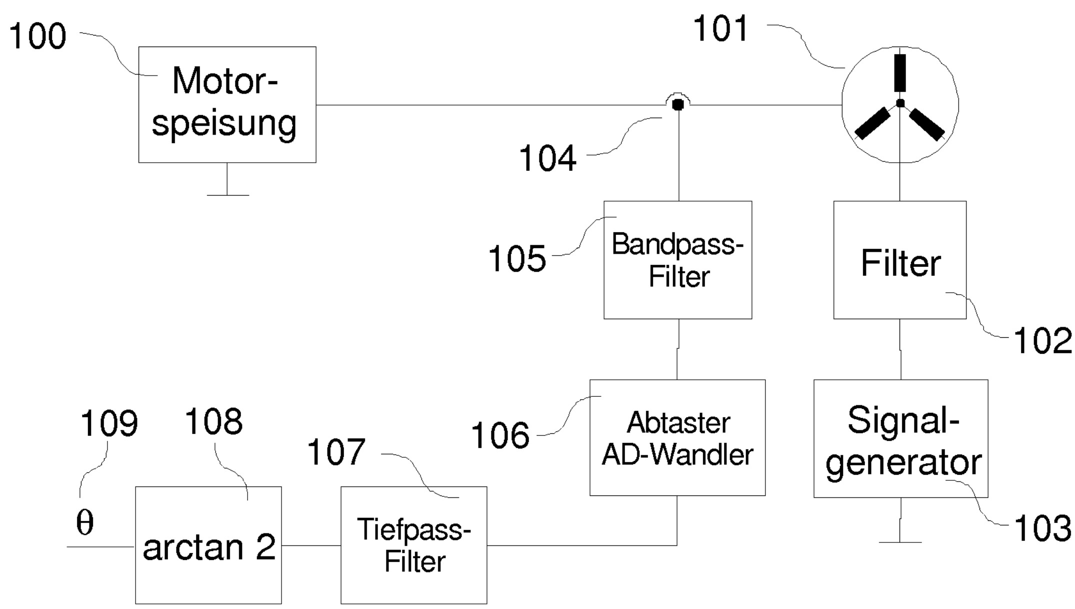


Fig.1

EP 2 293 430 A1

## Beschreibung

Die vorliegende Erfindung betrifft eine Schaltung und einen Verfahren zur Ermittlung der Rotorposition bei geringer Drehzahl oder bei Rotorstillstand.

### [Beschreibung und Einleitung des allgemeinen Gebietes der Erfindung]

Bei Elektromotoren versucht man zunehmend auf einen Sensor zur Drehzahloder Lageermittlung zu verzichten. Das hat die Vorteile, dass weniger Teile verbaut werden müssen und der Elektromotor damit weniger störanfällig ist.

Die Drehzahl oder Lage des Motorläufers kann indirekt über die Messung nur elektrischer Größen (z.B. Phasenspannung und/oder Phasenstrom) ermittelt werden. Bei Synchronmotoren kann die Lage des Läufers über die Elektromotorische Kraft (EMK) oder über lageabhängige Induktivität (auch als Anisotropie oder magnetische Schenkligkeit bezeichnet) ermittelt werden.

### [Stand der Technik]

Im folgenden wird der Läufer als Rotor bezeichnet, unabhängig davon ob eine Rotations- oder Translationsbewegung durchgeführt wird. Bei einer Translationsbewegung z.B. in Linearmotoren werden die ermittelten Positionswinkel in entsprechend zurückgelegte Strecken umgerechnet.

Es sind bereits Verfahren zur Erkennung der Rotorposition bekannt.

In der W02004019269A2 ist eine Rotorpositionserkennung beschrieben, die mit Pulsbreitenmodulation betrieben wird. In einer Pulspause wird ein hochfrequentes (HF) Signal in den Elektromotor eingespeist. Aus dem empfangenen Rücksignal wird die Rotorposition abgeschätzt. Nachteilig hierbei ist, dass das HF-Antwort-Signal auf die normalen Pulse aufmoduliert ist. Damit muss eine entsprechende Filterung der Pulse durchgeführt werden, woraus eine Ungenauigkeit resultiert.

In der US696746B1 ist ein Verfahren beschrieben worden, das ein verbessertes Verfahren zur HF-Signal-Einspeisung darstellt.

In der DE10393429 ist eine Verfahren beschrieben worden, bei dem durch Einspeisung eines HF-Signals die Rotorposition abgeschätzt wird.

In mehreren Schriften werden die resultierenden Ströme bzw. die Gegenelektromotorische Kraft gemessen z.B. US2002043953A1, US200900398410A1, EP500295B1.

Die bisherigen Verfahren weisen einige Nachteile auf. Verfahren, die auf der Ermittlung der Gegen-elektromotorischen Kraft basieren, verlieren ihre Genauigkeit bei niedriger Drehzahl, und sind nicht fähig die Lage des Rotors im Stillstand zu ermitteln. Methoden die auf lageabhängiger Induktivität basieren, ermöglichen die Lageermittlung auch im Stillstand, benötigen aber eine erhebliche Schenkligkeit. In den bisherigen Verfahren, die auf lageabhängiger Induktivität basieren, wird ein Strom- oder Spannungssignal als Nicht-Nullkomponente ($\alpha\beta$ oder dq Komponenten) eingeprägt, das heißt, der Sternpunkt ist isoliert. Da das Signal als Nicht-Nullkomponente eingeprägt wird, reduziert sich der nutzbare Spannungsbereich die zur Steuerung des Motors verbleibt. Diese Verfahren verfügen über eine niedrige Sensitivität bezüglich der Schenkligkeit, eine träge Dynamik und das eingeprägte Signal zur Rotorpositionsermittlung verursacht eine Wechselwirkung mit dem Stromregelkreis.

### [Aufgabe]

Aufgabe der vorliegenden Erfindung ist es die Nachteile des Standes der Technik mittels einer Anordnung und eines Verfahrens zur Auswertung der erhaltenen Signale zu beseitigen.

### [Lösung der Aufgabe]

Diese Aufgabe wird erfindungsgemäß gelöst durch eine Schaltungsanordnung in einem Elektromotor, bei dem der Sternpunkt der Statorspulen mit einem Filter verbunden ist.

Der Filter besteht zumindest aus einem Kondensator. In einer Kombination aus diesem Kondensator und einer Spule umfasst der Filter ein LC-Glied. In einer Kombination aus vorgenanntem Kondensator und einem Widerstand umfasst der Filter ein RC-Glied. Der Filter ist als Hochpass geschaltet.

Zur Ermittlung der Rotorposition wird die Clarke-Transformation angewendet. Dabei werden die Spannungen an die Statorspulen in zwei Nicht-Nullkomponenten ($u_\alpha$ und $u_\beta$) und eine Nullkomponente ($u_0$) transformiert :

$$\begin{bmatrix} u_\alpha \\ u_\beta \\ u_0 \end{bmatrix} = \frac{2}{3} \begin{bmatrix} 1 & -1/2 & -1/2 \\ 0 & \sqrt{3}/2 & -\sqrt{3}/2 \\ 1/2 & 1/2 & 1/2 \end{bmatrix} \cdot \begin{bmatrix} u_U \\ u_V \\ u_W \end{bmatrix}$$

dabei bezeichnen $u_U$, $u_V$ und $u_W$ die Spannungen der Statorspulen $U$ , $V$ und $W$.

Es wird ein hochfrequentes (HF)-Spannungssignal in die Nullkomponente eingeprägt. Der Filter am Sternpunkt bewirkt die Durchleitung des HF-Signals und sperrt die anderen Frequenzanteile der Nullkomponente.

Es bestehen mehrere Möglichkeiten zur Einprägung des HF-Signals. Die erste Möglichkeit, ist über einen Signalgenerator der direkt oder über einen Transformator an den Filter am Sternpunkt angeschlossen ist. Der Frequenzbereich reicht von 1 bis 100 kHz. Die zweite Möglichkeit besteht in der Verwendung der Pulsweitenmodulation (PWM) bei Motoren mit Wechselrichter (Inverter). Der Filter am Sternpunkt wird mit dem Wechselrichter verbunden. Damit kann die Nullkomponente des Wechselrichters auf die Motorspulen wirken. Der PWM-gesteuerte Wechselrichter erzeugt eine Nullkomponente mit einer Frequenz gleich zur Schaltfrequenz des Wechselrichters. Es sind auch Oberschwingungen der Schaltfrequenz oder ein in die PWM eingespeistes HF-Signal mit niedriger Frequenz verwendbar.

In beide Möglichkeiten kann eine höhere Frequenz eingeprägt werden als in herkömmlichen Verfahren. Das wiederum ermöglicht eine schnellere Dynamik in der Positionsermittlung.

In den meisten Motoren sind magnetische Schenkligkeiten vorhanden, auch wenn nur in geringer Ausmaße. Aufgrund der magnetische Schenkligkeiten, wird dem HF-Spannungssignal ein Stromanteil in der Nicht-Nullkomponente ($i_\alpha$ und $i_\beta$) eingeprägt, aus denen die Rotorposition ermittelt werden kann.

$$\begin{bmatrix} i_\alpha \\ i_\beta \\ i_0 \end{bmatrix} = \frac{2}{3} \begin{bmatrix} 1 & -1/2 & -1/2 \\ 0 & \sqrt{3}/2 & -\sqrt{3}/2 \\ 1/2 & 1/2 & 1/2 \end{bmatrix} \cdot \begin{bmatrix} i_U \\ i_V \\ i_W \end{bmatrix}$$

wobei $i_U$, $i_V$ und $i_W$ die Ströme der Statorspulen $U$ , $V$ und $W$ sind.

Es gibt mehrere Varianten zur Anwendung dieser Rotorpositionsermittlung. Wenn das HF-Signal mittels Signalgenerator eingeprägt wird, ist der gemessene Strom erst zu filtern, um andere Frequenzkomponenten, die nicht der Frequenz des HF-Signals entsprechen, zu beseitigen.

Für eine eingeprägte Spannung:

$$u_0 = \mathrm{a}_C \cos(\omega_C t)\,,$$

wobei $\mathrm{a}_C$ der Betrag und $\omega_C$ die Kreisfrequenz des HF-Signals sind, ergibt sich annähernd:

$$i_\alpha = \frac{\mathrm{a}_C k_C}{\omega_C} \cos(2\theta)\sin(\omega_C t)\,,$$

$$i_\beta = -\frac{\mathrm{a}_C k_C}{\omega_C} \sin(2\theta)\sin(\omega_C t)\,,$$

wobei $k_C$ eine Konstante ist, der vom Motor abhängt, und $\theta$ die Rotorposition ist. Die Konstante $k_C$ ist bis zu vier mal höher als in herkömmliche Verfahren, wo das HF-Spannungssignal in die Nicht-Nullkomponente eingeprägt wird.

Die gefilterten Stromsignale $i_\alpha$ und $i_\beta$ werden demoduliert. Die Demodulation erfolgt durch Multiplikation der Stromsignale mit dem Signal $\sin(\omega_C t)$ und wird mittels nachfolgendem Tiefpass gefiltert. Eine andere Möglichkeit der Demodulation besteht bei der synchronen Abtastung der Stromsignale in den Zeitpunkten, in denen $\omega_C t = \pi/2 + 2\pi k$, mit $k \in$ □ die Abtastzahl ist. Nach dieser Demodulation ergibt sich:

$$i_{\alpha k} = \frac{a_C k_C}{\omega_C} \cos(2\theta)$$

$$i_{\beta k} = -\frac{a_C k_C}{\omega_C} \sin(2\theta)$$

Die Rotorposition wird als Rotorwinkel durch die Berechnung von arctan2 der zwei demodulierten Signale und anschließender Division durch 2 ermittelt:

$$2\theta = \operatorname{atan} 2\left(-i_{\beta k}, \quad i_{\alpha k}\right)$$

Alternativ kann die Rotorposition aus der zwei demodulierten Signale über einen Phasenregelkreis (PLL) ermittelt werden.

Wenn das HF-Signal mittels Pulsweitenmodulation (PWM) eingeprägt wird, gibt es auch andere Möglichkeiten zur Rotorpositionsermittlung.

Bei der üblichen Raumzeiger-Pulsweitenmodulation, ergibt sich eine Nullkomponente die annährend rechteckig ist, und dessen Frequenz gleich zur Schaltfrequenz des Wechselrichters ist.

In der Regel, in über einen Wechselrichter gespeisten Motoren, wird der Strom synchron zur Pulsweitenmodulation abgetastet. Die Zeitpunkte, in dem der Strom abgetastet wird, liegen 90 Grad versetzt vom Nulldurchgang der Nullkomponente. Damit erfindungsgemäß die Position ermittelt werden kann, sollen die Stromwerte unmittelbar vor dem Nulldurchgang der Nullkomponente abgetastet werden. Das ist möglich durch Verschiebung des Abtastzeitpunkts oder durch Modifikation der Raumzeiger-Pulsweitenmodulation.

Niedrigere Frequenzkomponenten werden beseitigt, indem der momentane Stromwert vom vorher abgetasteten Stromwert abgezogen wird:

$$i_{\alpha \,\mathrm{dif}\; k} = i_{\alpha\, k} - i_{\alpha\,(k-1)}$$

$$i_{\beta \,\mathrm{dif}\; k} = i_{\beta\, k} - i_{\beta\,(k-1)}$$

wobei $k \in$ □ die Abtastzahl ist.

Anschließend werden die resultierenden Stromsignale $i_{\alpha\,\mathrm{dif}\,k}$ und $i_{\beta\,\mathrm{dif}\,k}$ demoduliert, indem der Vorzeichen jeder zweite Abtastperiode geändert wird:

$$i_{\alpha\,\mathrm{dem}\; k} = i_{\alpha\,\mathrm{dif}\; k}\,(-1)^{(k+1)}$$

$$i_{\beta\,\mathrm{dem}\,k} = i_{\beta\,\mathrm{dif}\,k}\,(-1)^{(k+1)}$$

Die demodulierten Signale $i_{\alpha\ \mathrm{dem}\ k}$ und $i_{\beta\ \mathrm{dem}\ k}$, werden dann mit einem Tiefpass gefiltert, in dem z.B. der momentane Wert und der Wert der vorherigen Abtastperiode gemittelt werden:

$$i_{\alpha\,\mathrm{av}\,k} = \tfrac{1}{2}\left(i_{\alpha\,\mathrm{dem}\,k} + i_{\alpha\,\mathrm{dem}\,(k-1)}\right)$$

$$i_{\beta\,\mathrm{av}\,k} = \tfrac{1}{2}\left(i_{\beta\,\mathrm{dem}\,k} + i_{\beta\,\mathrm{dem}\,(k-1)}\right)$$

Beim vorliegen einer magnetischen Schenkligkeiten im Motor, ergibt sich:

$$i_{\alpha\,av\,k} = \mathrm{a}_C T_S k_C\,\cos(2\theta)$$

$$i_{\beta\,av\,k} = -\mathrm{a}_C T_S k_C\,\sin(2\theta)$$

wobei $T_S$ die Abtastperiode ist.

Die Rotorposition wird als Rotorwinkel durch die Berechnung von arctan2 der Signale $i_{\alpha\ av\ k}$ und $i_{\beta\ av\ k}$, und anschließender Division durch 2 ermittelt. Alternativ kann die Rotorposition aus den zwei Signalen über einen Phasenregelkreis (Phase-Locked-Loop (PLL)) ermittelt werden.

Durch die Ermittlung des Winkels ist es möglich die Geschwindigkeit des Rotors zu erfassen.

Das HF-Signal wird ständig eingespeist oder die PWM gibt ein Signal zur Generierung oder Einleitung des HF-Signals aus. Entsprechend erfolgt die Abtastung der Stromwerte, in dem von der PWM ein Signal ausgegeben wird den Stromanteil zu erfassen oder es wird ständig der Stromanteil erfasst.

Eine andere Alternative ist die Generierung des HF-Signals durch die PWM indem der PWM-Puls für den Nulldurchgang als ein HF-Signal mit einer Frequenz im Bereich von 1 kHz bis 100 kHz bevorzugt 75 kHz gesendet wird. Nach der Durchleitung des HF-Signals durch den Sternpunkt und den am Sternpunkt angeschlossenen Filter wird der Stromanteil ermittelt. Dadurch ist es möglich bei jedem Nulldurchgang einer Phase ein HF-Signal zu senden und den Stromanteil nach dem Filter zu ermitteln.

Eine weitere Alternative ist es zumindest Teile des PWM-Pulses außerhalb des Nulldurchgangs als HF-Signal zu senden. Damit ist keine Abwartung bis zum nächsten oder übernächsten Nulldurchgang einer Phase notwendig. Damit ist es möglich in einer zeitversetzten Abfolge jeweils ein HF-Signal zu senden und den Stromanteil nach dem Filter zu ermitteln.

Alternativ kann das HF-Signal zusätzlich zum PWM-Puls eingespeist werden z.B. beim Nulldurchgang oder in den Pausen zwischen zwei PWM-Pulsen.

Die Rotorposition wird mittels trigonometrischer Funktionen aus dem ermittelten Stromanteil berechnet. Alternativ kann die Rotorposition durch Stromsignalauswertung mittels Phasenregelkreis (PLL) ermittelt werden.

**[Ausführungsbeispiele]**

In der Fig. 1 ist ein Blockschaltbild dargestellt, der für eine Rotorpositionsbestimmung verwendet wird, indem das HF-Signal mittels Signalgenerator eingeprägt wird. Dabei wird der Motor **101** von einer beliebigen Motorspeisung **100** versorgt (z.B. das Netz oder ein Wechselrichter). Über den Filter **102** wird der Sternpunkt des Motors mit einem Signalgenerator **103** geschlossen, der ein HF-Signal in Nullkomponente einprägt. Der Signalgenerator **103** ist zur Masse der Motorspeisung bezogen. Der resultierende Strom wird über einen Stromwandler **104** erfasst, der gleichzeitig die Clarke-Transformation umsetzt (siehe Fig. 2), um so die Nicht-Nullkomponente extrahieren. Die mit dem Signalgenerator synchronisierten Abtaster und AD-Wandler **106** dienen zur Demodulation und Digitalisierung der Signale. Die weitere Signalbearbeitung erfolgt digital (z.B. über einen Mikrokontroller oder FPGA). Das über einem Tiefpassfilter gefilterte Signal **107,** wird zur Berechnung des Rotorwinkels θ **109** über arctan **108** verwendet.

In Fig. 2 wird eine Stromwandler-Anordnung **104** dargestellt, der die Clarke-Transformation umsetzt.

Die Fig. 3 zeigt die Erfindung, wenn das HF-Signal mittels Signalgenerator eingeprägt wird, angewendet in einem Antriebsystem mit Rotorpositionsregelung.

Es wird ein HF-Spannungssignal **301** in einen Verstärker **302** eingespeist. Das HF-Signal passiert den Kondensator (LC-Glied) **304** und breitet sich in den Statorspulen aus. Die Stromanteile pro Statorspule werden ausgelesen **306,** gefiltert **307** und die Rotorposition als Winkel ermittelt **309.**

In der Fig. 4 ist ein Blockschaltbild dargestellt, der für eine Rotorpositionsbestimmung verwendet wird, indem das HF-Signal über der PWM gesteuerten Wechselrichter eingeprägt wird. Dabei wird mit einer Pulsweitenmodulation **400** Steuersignale für den Motor **402** generiert, die über einen Wechselrichter **401** dem Motor **402** zugeführt werden.

Über den Filter **403** wird der Sternpunkt des Motors mit dem Zwischenkreis des Wechselrichters **401** geschlossen. In diese Weise wirkt die vom PWM erzeugten Nullkomponente auf die Motorspulen.

Der resultierende Strom wird über einen Stromwandler **404** erfasst. Nach einen mit den PWM **400** synchronisierte Abtastung **405,** wird das analoge Stromsignal in ein digitales gewandelt **405.** Das abgetastete Stromsignal wird von Phasengrößen in einem Raumzeiger transformiert (Clarke-Transformation) **406** und so die Nicht-Nullkomponente extrahiert. Die momentanen Stromwerte werden vom vorherigen abgetasteten Stromwerte abgezogen **407,** um niedrigere Frequenzkomponenten zu beseitigen. Eine Demodulation erfolgt indem das Vorzeichen jeder zweite Abtastperiode geändert wird **408.** Der Mittelwert des Signals über eine Abtastperiode **409,** wird zur Berechnung des Rotorwinkels θ **411** über arctan **410** verwendet.

In der Fig. 5 ist die Schaltung vom Filter verbunden mit dem Sternpunkt des Motors und dem Zwischenkreis des Wechselrichters dargestellt.

Die Fig. 6 zeigt die Erfindung, wenn das HF-Signal über den mittels PWM gesteuerten Wechselrichter eingeprägt wird, angewendet in einem Antriebsystem mit Rotorpositionsregelung.

In der Fig. 7(a) sind die Steuersignale eine modifizierte Raumzeiger-Pulsweitenmodulation dargestellt. In der Fig. 7 (b) sind die entsprechende Steuersignale des Wechselrichters dargestellt. In der Fig. 7 (c) ist die erzeugte Nullkomponente, die zur HF-Signal Generierung dient, dargestellt. Die Abtastzeitpunkte (701, 702 und 703) liegen unmittelbar vor den Nulldurchgängen des HF-Signals.

In der Fig. 8 sind die demodulierten und gefilterte Stromsignale $i_{\alpha\ av}$ und $i_{\beta\ av}$ als Funktion der Position dargestellt.

**[Abbildungslegenden und Bezugszeichenliste]**

Fig. 1 Blockschaltbild zur Rotorpositionserkennung
Fig. 2 Ermittlung des Stromanteils
Fig. 3 Blockschaltbild zur Rotorpositionserkennung
Fig. 4 Blockschaltbild zur Rotorpositionserkennung
Fig. 5 Schaltung des Wechselrichters, Motor und Sternpunkfilter
Fig. 6 Blockschaltbild zur Rotorpositionserkennung
Fig. 7 HF-Signal in Nullkomponente
Fig. 8 Demodulierten und gefilterte Stromsignale

**Patentansprüche**

1. Eine Anordnung zur Ermittlung der Rotorposition **dadurch gekennzeichnet, dass** der Sternpunkt eine Verbindung zu einem Filter aufweist.

2. Eine Anordnung nach Anspruch 1 **dadurch gekennzeichnet, dass** der Filter mit dem Sternpunkt und dem Wechselrichter verbunden ist.

3. Eine Anordnung nach Ansprüchen 1 bis 2 **dadurch gekennzeichnet, dass** der Filter mindestens ein LC-Glied aufweist.

4. Eine Anordnung nach Ansprüchen 1 bis 3 **dadurch gekennzeichnet, dass** der Filter mindestens ein RC-Glied aufweist.

**5.** Eine Baugruppe zur Ermittlung der Rotorposition **dadurch gekennzeichnet, dass** diese mindestens einen an einen Sternpunkt angeschlossenen Filter und eine Auswerteeinheit aufweist.

**6.** Ein Verfahren zur Ermittlung der Rotorposition **dadurch gekennzeichnet, dass** ein HF-Signal eingeprägt und durch einen am Sternpunkt angeschlossenen Filter nach Anspruch 3 oder 4 durchgeleitet wird.

**7.** Ein Verfahren nach Anspruch 6 **dadurch gekennzeichnet, dass** ein HF-Signal in die Nullkomponente eingeprägt wird.

**8.** Ein Verfahren nach Ansprüchen 6 bis 7 **dadurch gekennzeichnet, dass** das HF-Signal über ein mit Pulsweitenmodulation gesteuerten Wechselrichter in die Nullkomponente eingeprägt wird.

**9.** Ein Verfahren nach Ansprüchen 6 bis 8 **dadurch gekennzeichnet, dass** mittels ein HF-Spannungssignal in der Nullkomponente ein HF-Stromsignal in der Nicht-Nullkomponente erzeugt wird.

**10.** Ein Verfahren nach Ansprüchen 6 bis 9 **dadurch gekennzeichnet, dass** in einer Auswerteeinheit der Stromanteil des HF-Spannungssignals ermittelt und mittels trigonometrischer Funktionen in einen Rotorwinkel umgerechnet wird.

**11.** Ein Verfahren nach Ansprüchen 6 bis 10 **dadurch gekennzeichnet, dass** in einer Auswerteeinheit der Stromanteil des HF-Spannungssignals ermittelt und mittels Phasenregelkreis in einen Rotorwinkel umgerechnet wird.

**12.** Ein Verfahren nach Ansprüchen 6 bis 11 **dadurch gekennzeichnet, dass** die erzeugten HF-Spannungssignale eine Frequenz im Bereich 1 kHz bis 100 kHz bevorzugt 25 kHz umfassen.

**13.** Ein Verfahren nach Ansprüchen 6 bis 12 **dadurch gekennzeichnet, dass** das HF-Spannungssignale zuerst durch den Filter und dann durch den Sternpunkt geleitet wird.

**14.** Ein Verfahren nach Anspruch 6 **dadurch gekennzeichnet, dass** die von der PWM erzeugten Pulse zumindest anteilig als HF-Spannungssignal mit einer Frequenz im Bereich 1 kHz bis 100 kHz bevorzugt 75 kHz ausgebildet sind.

**15.** Ein Verfahren nach Ansprüchen 6 und 14 **dadurch gekennzeichnet, dass** HF-Spannungssignale zuerst durch den Sternpunkt und dann durch den Filter geleitet wird.

**16.** Ein Verfahren nach Ansprüchen 6, 14 bis 15 **dadurch gekennzeichnet, dass** in einer Auswerteeinheit der Stromanteil des HF-Spannungssignals ermittelt und mittels trigonometrischer Funktionen in einen Rotorwinkel umgerechnet wird.

**17.** Ein Verfahren nach Ansprüchen 6, 14 bis 16 **dadurch gekennzeichnet, dass** in einer Auswerteeinheit der Stromanteil des HF-Spannungssignals ermittelt und mittels Phasenregelkreis in einen Rotorwinkel umgerechnet wird.

**[Anhängende Zeichnungen]**

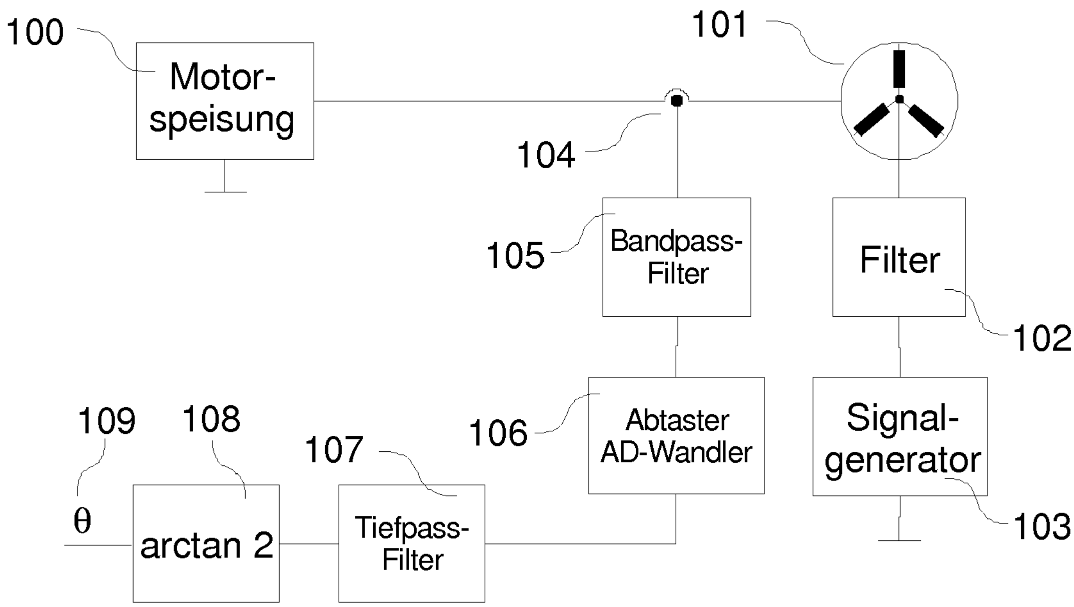


Fig.1

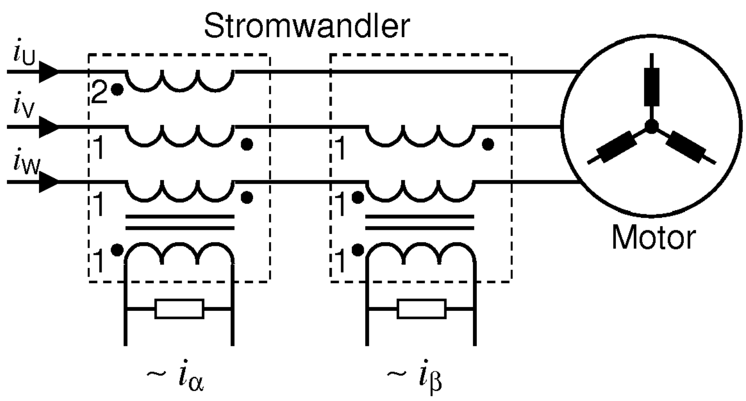


Fig. 2

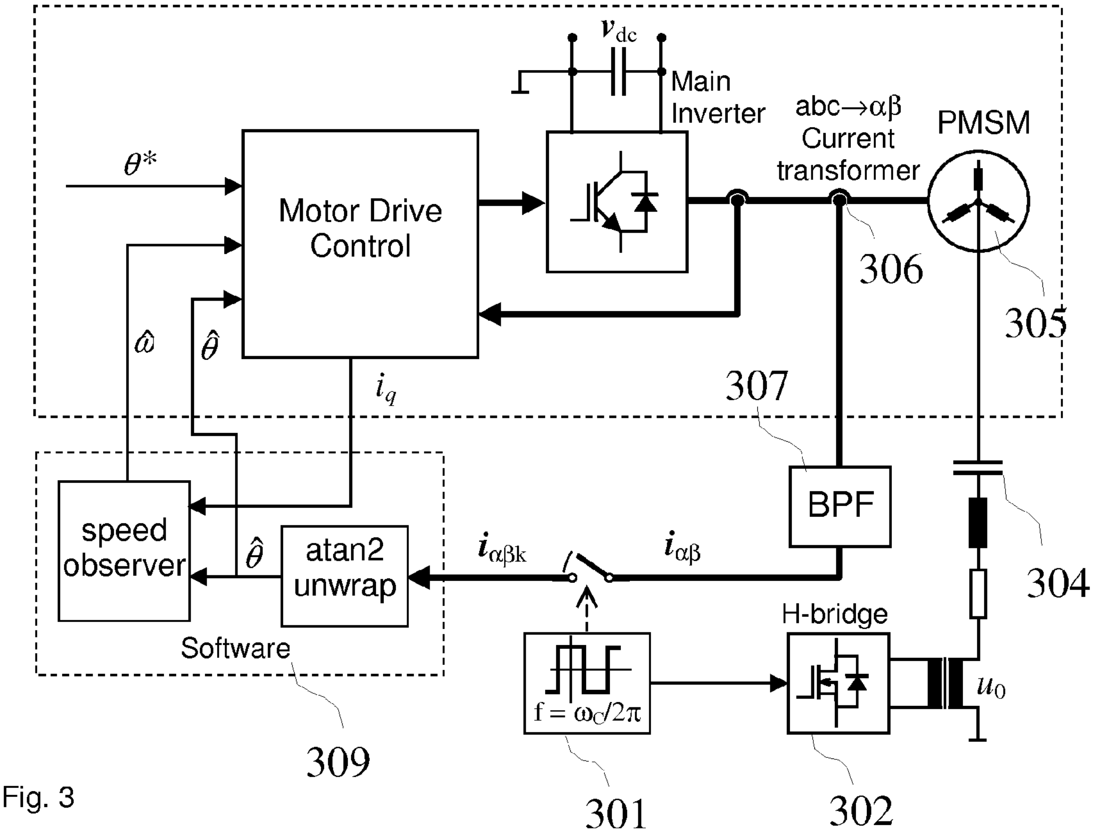

vdc
Main Inverter
abc→αβ Current transformer
PMSM
θ*
Motor Drive Control
306
305
ω̂
θ̂
iq
307
BPF
304
speed observer
θ̂
atan2 unwrap
iαβk
iαβ
H-bridge
Software
f = ωC/2π
u0
309
301
302


Fig. 3

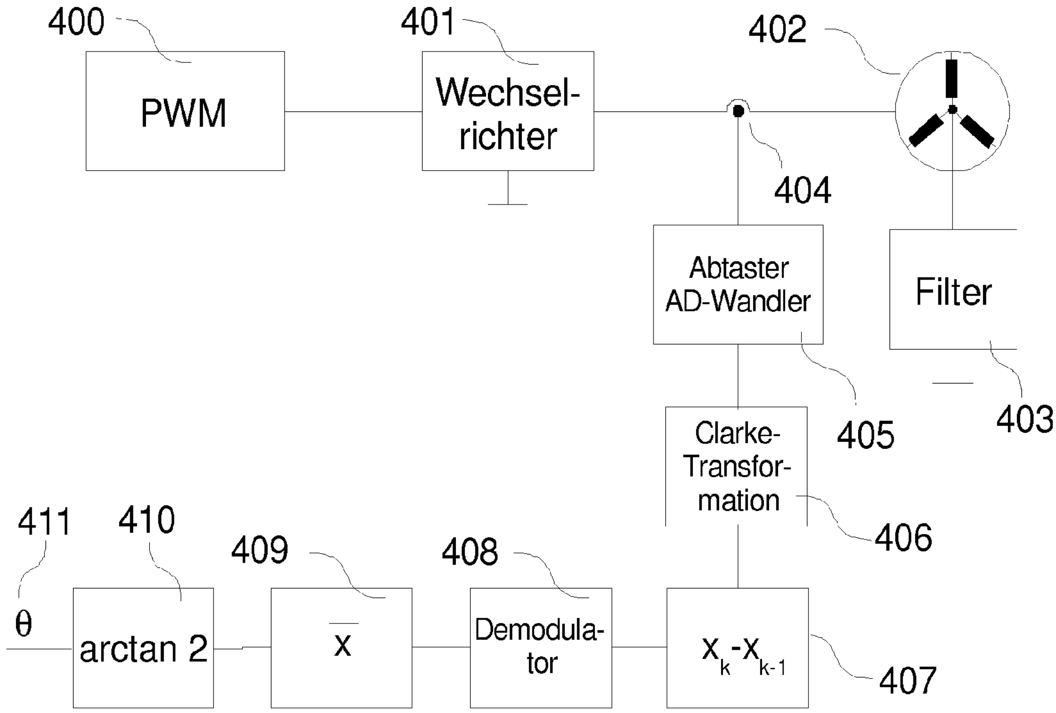

400
401
402
PWM
Wechsel-richter
404
Abtaster AD-Wandler
Filter
405
403
Clarke-Transfor-mation
406
411
410
409
408
θ
arctan 2
x̄
Demodula-tor
Xk-Xk-1
407


Fig. 4

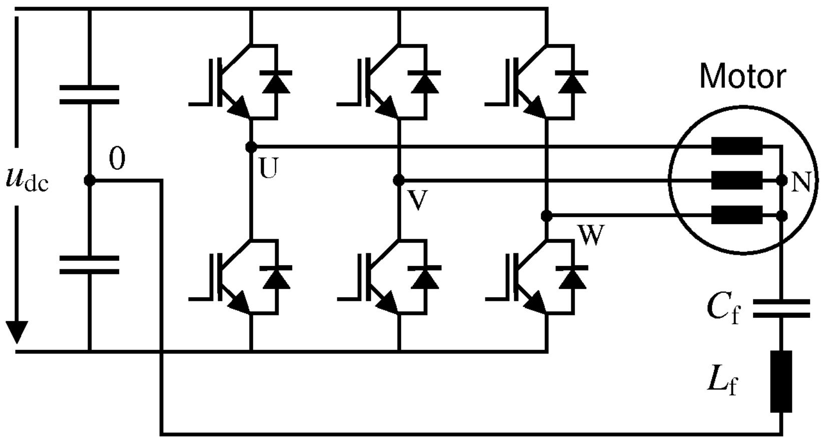
Motor
$u_{dc}$
0
U
V
W
N
$C_f$
$L_f$

Fig. 5

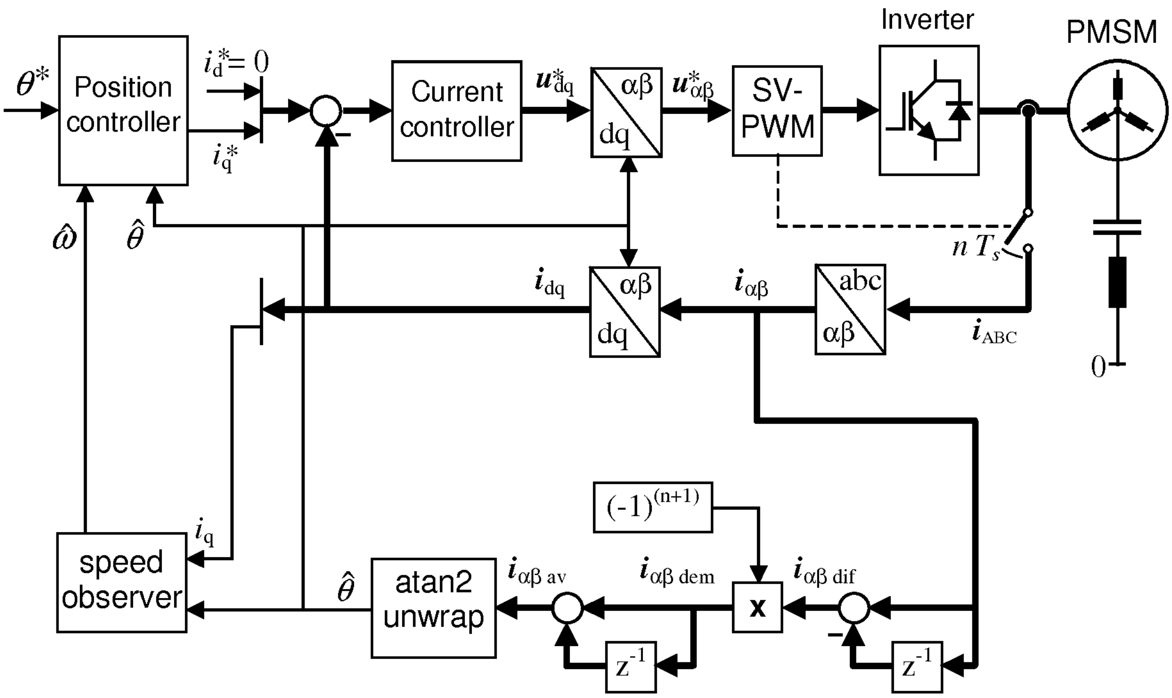
$\theta^*$
Position controller
$i_d^* = 0$
$i_q^*$
Current controller
$u_{dq}^*$
αβ
dq
$u_{\alpha\beta}^*$
SV-PWM
Inverter
PMSM
$n\,T_s$
$\hat{\omega}$
$\hat{\theta}$
$i_{dq}$
$i_{\alpha\beta}$
abc
αβ
$i_{ABC}$
0
$(-1)^{(n+1)}$
$i_q$
speed observer
atan2 unwrap
$i_{\alpha\beta\ av}$
$i_{\alpha\beta\ dem}$
$i_{\alpha\beta\ dif}$
x
$z^{-1}$
$z^{-1}$

Fig. 6

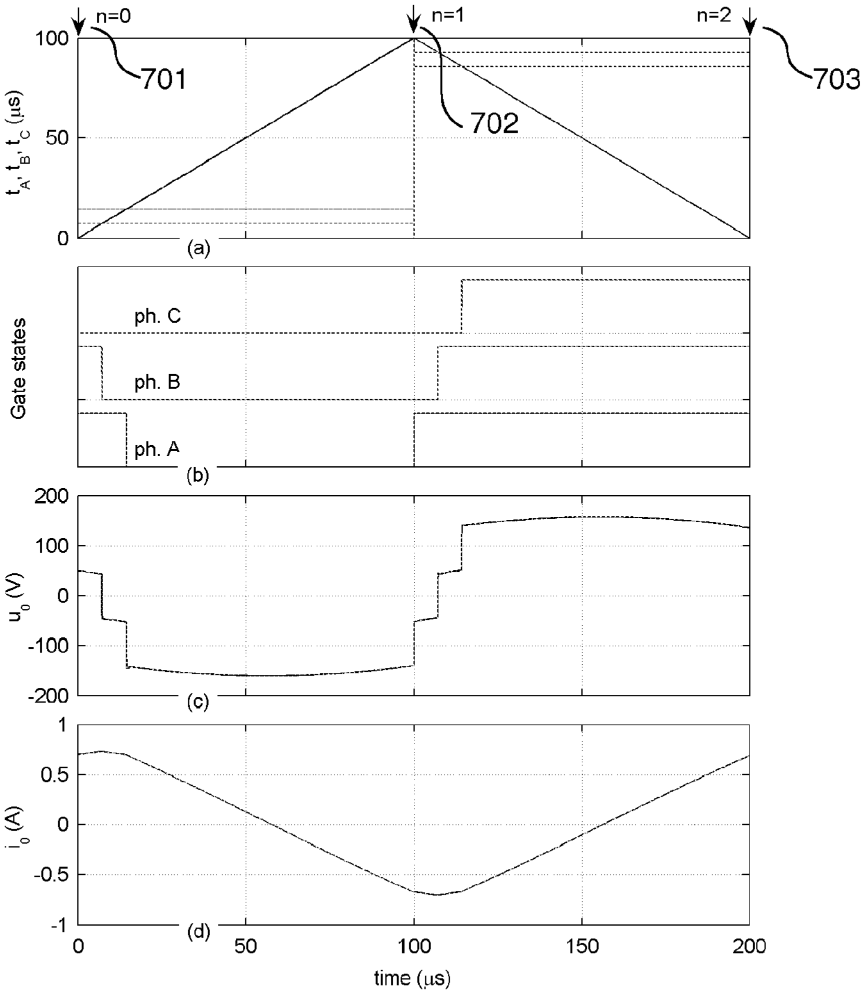
n=0
n=1
n=2
701
702
703
100
50
0
$t_A$, $t_B$, $t_C$ (μs)
(a)
Gate states
ph. C
ph. B
ph. A
(b)
200
100
0
-100
-200
$u_0$ (V)
(c)
1
0.5
0
-0.5
-1
$i_0$ (A)
(d)
0
50
100
150
200
time (μs)

Fig. 7

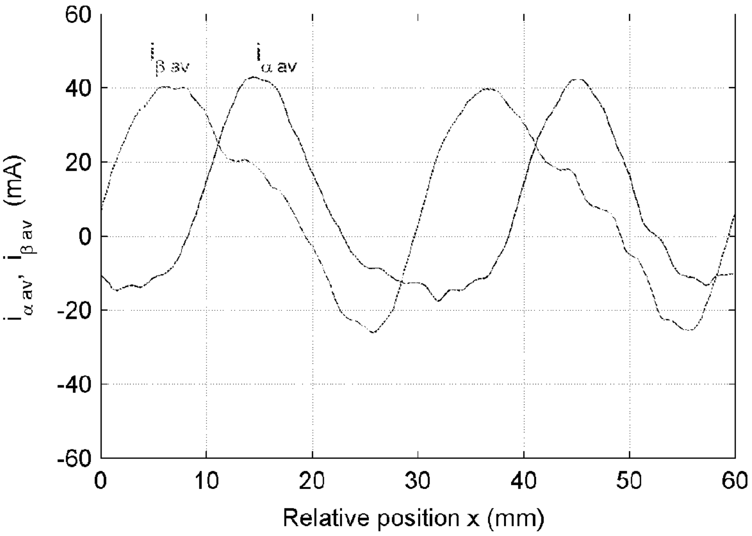
60
40
20
0
-20
-40
-60
$i_{\beta\,av}$
$i_{\alpha\,av}$
$i_{\alpha\,av}$, $i_{\beta\,av}$ (mA)
0
10
20
30
40
50
60
Relative position x (mm)

Fig. 8

Europäisches Patentamt
European Patent Office
Office européen des brevets

# EUROPÄISCHER RECHERCHENBERICHT

Nummer der Anmeldung
EP 09 16 9607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/058336 A1 (NARUMI SATOSHI [JP] ET AL) 5. März 2009 (2009-03-05)<br>* Zusammenfassung; Abbildungen 1,2 *<br>----- | 1,2,4,5 | INV.<br>H02P6/18 |
| X | JP 60 207489 A (MATSUSHITA ELECTRIC IND CO LTD) 19. Oktober 1985 (1985-10-19)<br>* Zusammenfassung; Abbildung 4 *<br>----- | 6,7 | |
| A | US 2009/146598 A1 (HAYASHI SHIGEO [JP] ET AL) 11. Juni 2009 (2009-06-11)<br>* das ganze Dokument *<br>----- | 1-17 | |
| A | EP 0 730 341 A (SONY CORP [JP])<br>4. September 1996 (1996-09-04)<br>* das ganze Dokument *<br>----- | 1-17 | |
| A | JP 2001 275388 A (KANSAI NIPPON ELECTRIC)<br>5. Oktober 2001 (2001-10-05)<br>* Zusammenfassung *<br>----- | 1-17 | |
| A,D | WO 2004/019269 A (INT RECTIFIER CORP [US])<br>4. März 2004 (2004-03-04)<br>* das ganze Dokument *<br>----- | 1-17 | RECHERCHIERTE SACHGEBIETE (IPC)<br>H02P |

Der vorliegende Recherchenbericht wurde für alle Patentansprüche erstellt

| Recherchenort | Abschlußdatum der Recherche | Prüfer |
|---|---|---|
| München | 5. Februar 2010 | Schürle, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

1
EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 09 16 9607

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2010

| Im Recherchenbericht angeführtes Patentdokument | Datum der Veröffentlichung | Mitglied(er) der Patentfamilie | Datum der Veröffentlichung |
|---|---|---|---|
| US 2009058336 A1 | 05-03-2009 | JP 2009055759 A | 12-03-2009 |
| JP 60207489 A | 19-10-1985 | JP 1836724 C | 11-04-1994 |
| | | JP 5046197 B | 13-07-1993 |
| US 2009146598 A1 | 11-06-2009 | JP 2009142064 A | 25-06-2009 |
| | | KR 20090060166 A | 11-06-2009 |
| EP 0730341 A | 04-09-1996 | CN 1145548 A | 19-03-1997 |
| | | IN 192973 A1 | 19-06-2004 |
| | | SG 42337 A1 | 15-08-1997 |
| | | US 5869944 A | 09-02-1999 |
| JP 2001275388 A | 05-10-2001 | KEINE | |
| WO 2004019269 A | 04-03-2004 | TW 267639 B | 01-12-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2004019269 A2
- US 696746 B1
- DE 10393429
- US 2002043953 A1
- US 200900398410 A1
- EP 500295 B1